Europäisches Patentamt

(19) **European Patent Office**

**Office européen des brevets**

(11) Numéro de publication: **0 032 888**
**A2**

(12) # DEMANDE DE BREVET EUROPEEN

(21) Numéro de dépôt: 81870001.5

(51) Int. Cl.³: **F 16 H 29/12**

(22) Date de dépôt: 08.01.81

(30) Priorité: 17.01.80 BE 881196

(71) Demandeur: **Van Hee, Jan, 151, Rue Potagère, B-1030 Bruxelles (BE)**

(43) Date de publication de la demande: **29.07.81**
**Bulletin 81/30**

(72) Inventeur: **Van Hee, Jan, 151, Rue Potagère, B-1030 Bruxelles (BE)**

(84) Etats contractants désignés: **DE FR GB IT NL SE**

(54) **Transformateur de couple, fonctionnant comme embrayage et variateur.**

(57) Un cylindre 3 coulisse radialement sur un arbre de prise 1. Ce coulissement est commandé par la rotation de deux boulons 6 et 7, qui ne peuvent bouger radialement, parcequ'ils sont retenus dans des cavités de l'arbre de prise I. Ces boulons s'engrènent dans un filet. à l'intérieur du cylindre coulissant 3, de telle façon qu'en tournant ils font coulisser ce cylindre vers une position d'excentricité ou vice versa. Ces boulons 6 et 7 s'engrènent, par des dents dans leur base, dans un vis sans fin qui se trouve sur une tige de réglage 15. Cette tige se trouve dans le centre axial de l'arbre de prise 1, et se met à tourner en contresens quand un disque 13, fixé sur cette tige, est freiné. La tige de réglage 15 tourne dans le sens de rotation quand un autre disque 14 est freiné, ce disque étant relié à travers des roues dentées satellites 18 à la tige de réglage 15.

Autour du cylindre coulissant il y a un cylindre à charnières 4 qui tourne à polarité fixe parcequ'il est guidé par des croix de guidage 12. Ces croix coulissent verticalement dans des entailles dans le cylindre à charnières 4 et horizontalement dans des entailles dans la masse. Pivotant sur le cylindre à charnières 4 il y a un nombre de poussoirs, qui coulissent par leurs sommets cylindriques dans une canelure d'un cylindre de sortie 2 plus grand. Les sommets de poussoir sont reliés chacun

à deux corps de coinçage 19 et 20, qui bloquent tout mouvement des sommets de poussoir 5 par rapport au cylindre de sortie 2, seulement dans le sens de rotation. Ainsi les poussoirs donnent une série d'impulsions au cylindre de sortie et le font tourner avec une vitesse qui dépend du degré d'excentricité du cylindre coulissant 2.

0032888

Transformateur de couple, fonctionnant comme embrayage
et variateur

L'invention concerne une transmission d'énergie cinétique rotative, par laquelle un arbre de prise fait tourner
un cylindre de sortie, selon un rapport de vitesses
et de couple, qui est continuellement variable, aussi
sous pleine charge.Cette transmission fonctionne selon
le principe du variateur à levier, mieux connu sous
son nom allemand "Schaltwerkgetriebe" ou " Schaltwerkregelgetriebe".
Il y a plusieurs sortes de transformateurs de couple
ou de variateurs.Le type hydraulique est très répandu.
Son désavantage principal  est sa perte d'énergie.
Il y a les variateurs à friction et à courroie, dont le
désavantage est la perte d'energie et un degré élevé
d'usure.
Les variateurs à levier font l'objet de plusieurs brevets,
entre autres  celui de la transmission RvR(Robin van Roggen)
(Voir litérature chez Zahnradfabrik Friedrichshafen, RFA)
Ces variateurs fonctionnent selon le principe de la transformation d'une rotation initiale dans un mouvement de va-et-
vient variable. Ce mouvement est transformé ensuite
dans un mouvement unidirectionnel rotatif, au moyen de
mécanismes de roue libre.Ce type de transmission est en
principe simple et presque sans perte d'énergie, mais
dans  ses exécutions pratiques, il s'est montré trop
volumineux, trop couteux à construire et s'usant trop
vite  sous des charges même moyennes. La cause principale
de ces désavantages est,  que  le mouvement de sortie,
necessairement homocinétique ou presque, demande l'addition
de mécanismes compliqués. Ensuite  il y a l'usure rapide
des éléments de roue libre.
La présente invention essaye d'éviter ces désavantages
par une construction qui dispose les différents organes
de façon concentrique et réduit    les mécanismes de roue
libre      aux formes les plus simples.

Ceci permet de multiplier les éléments d'impulsion et d'employer des éléments de roue libre robustes et durables. Cette construction permet de transmettre plusieurs dizaines de chevaux de façon presque homocinétique, dans des dimensions modestes, avec une grande durabilité.La variation des rapports de vitesse est continue et va de zéro à une vitesse de sortie qui est environ 3,3 fois plus lente que celle de l'arbre de prise. Ce rapport est idéal pour attaquer le différentiel d'une voiture à traction avant.

L'invention est exposée plus en détail ci-après à l'aide de dessins qui représentent seulement un mode d'exécution.

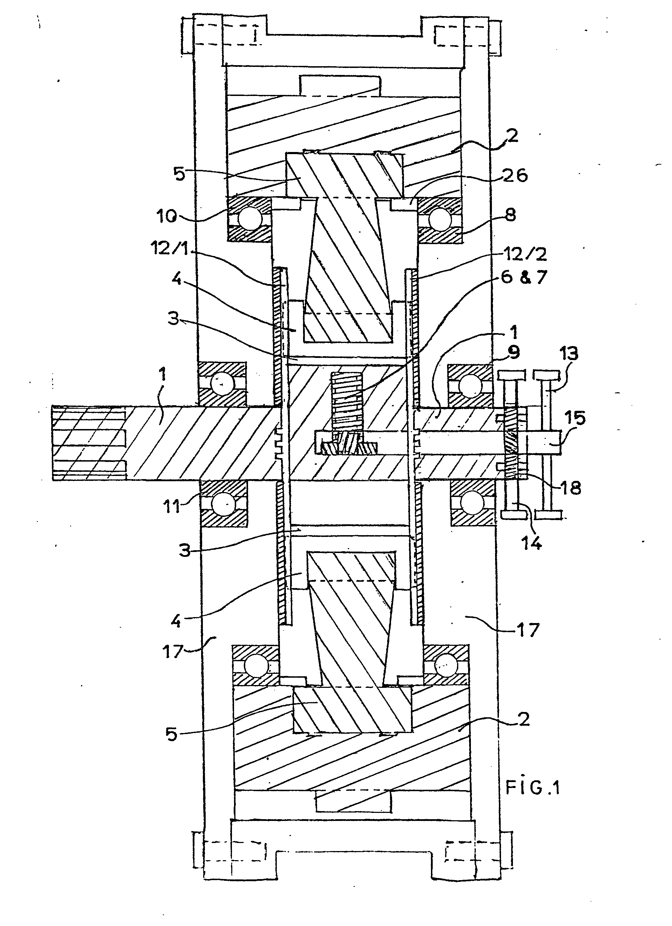

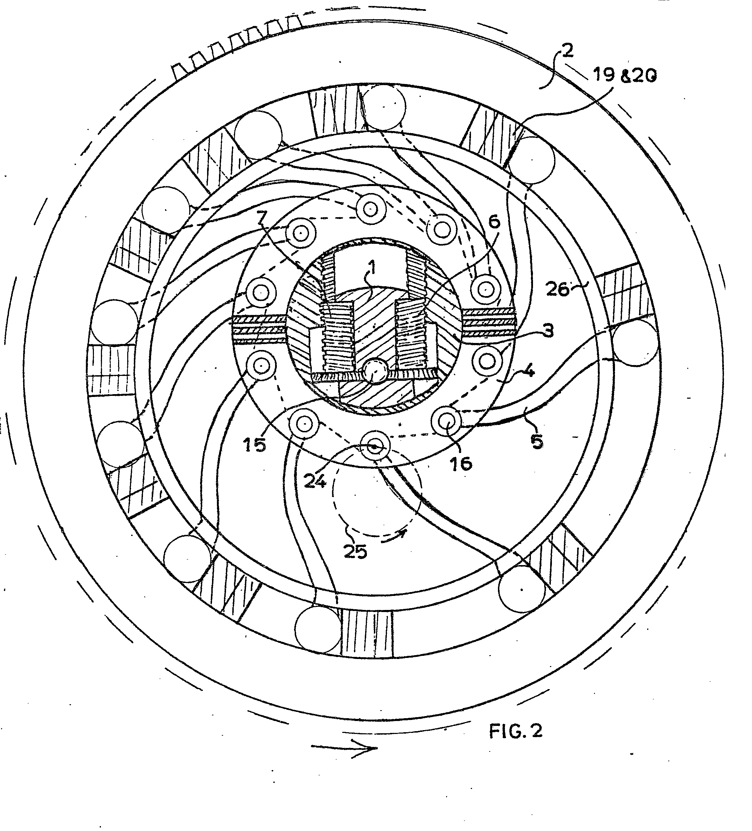

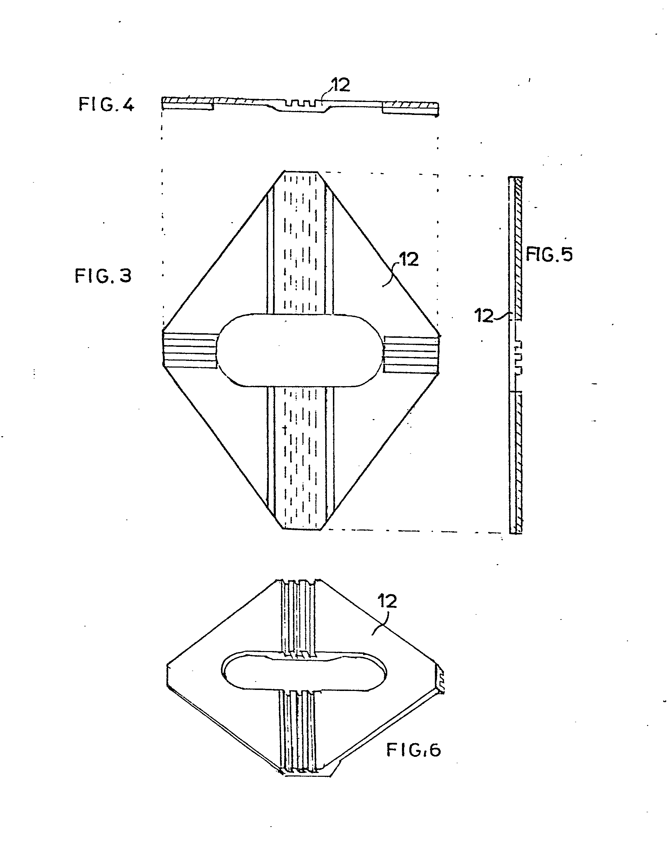

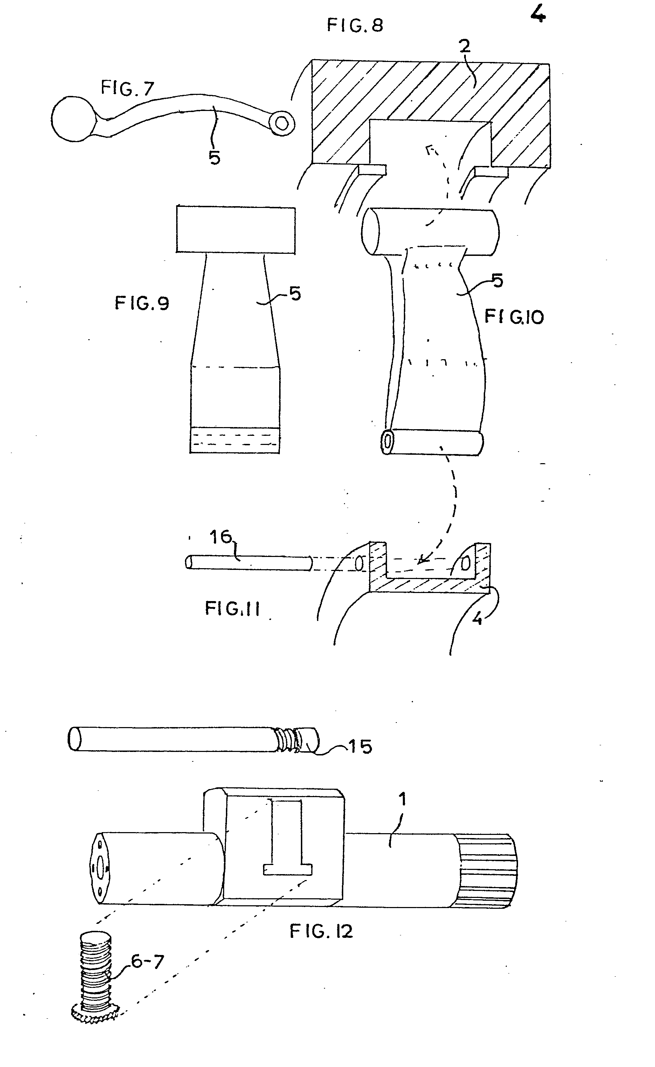

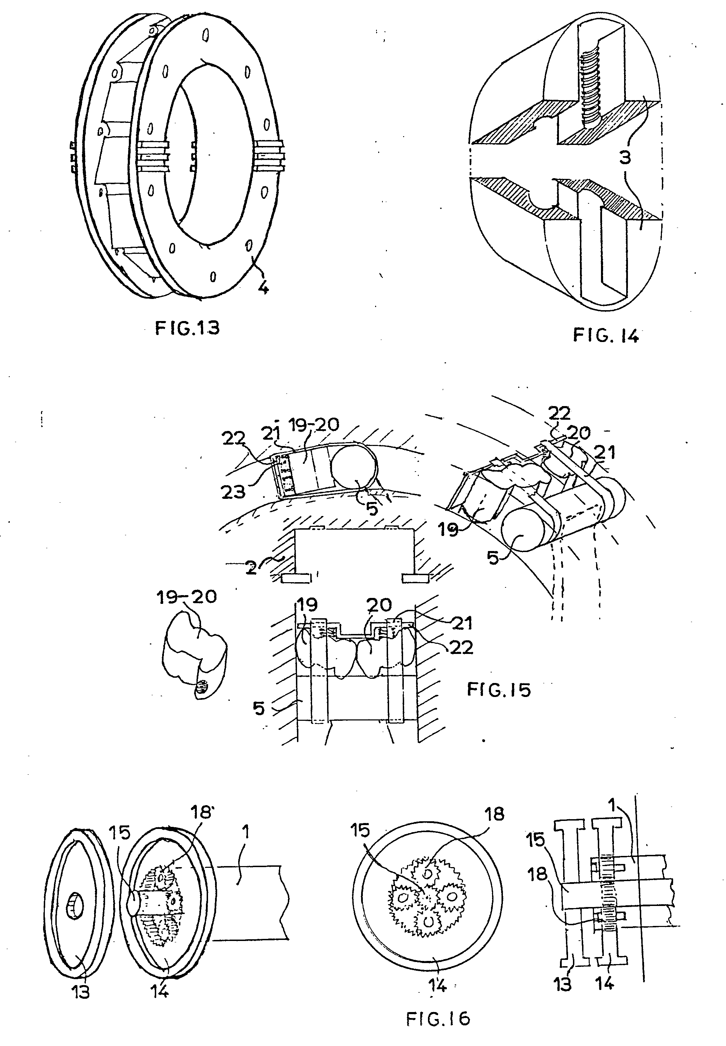

La figure 1 représente une coupe à travers l'arbre de prise en position d'excentricité nulle. Figure 2 est une coupe de vue d'en face, en position d'excentricité maximale. Figures 3,4,5 et 6 montrent différents aspects des deux croix de guidage. Figures 7,8,9,I0 et II donnent des vues différentes d'un poussoir et de la façon de le monter.Figure I2 représente, en perspective, l'arbre de prise. Figure I3 le cylindre à charnières, figure I4 le cylindre coulissant, figure I5 le mécanisme de roue libre. Figure I6 montre différentes vues du système de commande de la tige de réglage.

L'arbre de prise I est pourvu près de son centre d'une allonge dans le sens radial, d'un côté. Ainsi un corps cylindrique 3 y peut coulisser dans le sens radial, en transformant le mouvement rotatif de l'arbre de prise 1 concentrique, dans un mouvement à excentricité variable. Ce corps cylindrique est appelé le cylindre coulissant 3 . Autour de ce cylindre coulissant 3 , se trouve le cylindre à charnières 4 , qui est guidé par une croix de guidage I2 à chaque coté,de façon qu'il tourne à polarité fixe. Ca veut dire qu'en tournant, le dessus reste dessus, etc... mouvement analogue avec celui d'une pédale de bicyclette

- 3 -

0032888

Le fonctionnement des croix de guidage est·le suivant:
Dans le cylindre à charnières 4 , il y a des entailles
radiales parallèles en dessus et en dessous. Ces entailles
coulissent dans des entailles correspondants des croix
de guidage.De l'autre côté des croix de guidage, il
y a des entailles qui coulissent dans des entailles dans
la masse, qui se trouvent à 90 ° des entailles du cylindre à charnières 4 . Ainsi le cylindre à charnières 4 .
ne tourne pas autour de son axe, mais sa polarité reste
la même. Le mouvement qu'il fait est circulaire. Par exemple
le point 24, qui est la base d'un poussoir fait un mouvement circulaire 25 , ayant comme rayon celui du mouvement
excentrique. Dix poussoirs 5 sont montés de façon pivotante sur le cylindre à charnières 4 au moyen de
goupilles 16 . Le sommet des poussoirs a une forme
cylindrique et peut faire un mouvement de va-et-vient
dans une cannelure en forme de U, qui se trouve dans le
cylindre de sortie 2 . Cette cannelure est concentrique
avec l'arbre de prise 1 et avec le cylindre de sortie 2 .
Des anneaux 26 , un de chaque côté, retiennent les sommets de poissoir dans la cannelure. A chaque sommet de
poussoir 5 , deux corps de coinçage 19 et 20 ,sont
rattachés au moyen de boucles 21 et une plaque 22 .
Ces corps de coinçage , 19 et 20 sont montés afin d'
opérer de façon axiale et puisqu'ils sont pressés par
des ressorts 23 contre les côtés latérales de la cannelure du cylindre sortant, ils se coincent quand ils
mouvent avec une vitesse plus grande que celle du cylindre de sortie,dans le sens de celui ci. Ils glissent
librement quand ceci n'est pas le cas. Ainsi ils constituent un mécanisme,dit de roue libre. Chaque sommet
de poussoir 5 a des caractéristiques de mouvement qui
dépendent du mouvement circulaire de la base de poussoir 25.
Il en suit que chaque sommet de poussoir a une vitesse
plus grande que les autres pendant un dixième de tour
ou 36 ° .

- 4 -

Le sommet de poussoir le plus vite transmet son mouvement à travers les corps de coinçage I9 et 20 au cylindre de sortie 2 . Ainsi il y a une séquence d'impulsions qui font tourner le cylindre de sortie . L'irrégularité des impulsions de poussoir est un peu plus de 1%. Du côté extérieur du cylindre de sortie 2  il y a une roue dentée qui transfère le mouvement aux organes à actionner.

La commande de l'excentricité du cylindre coulissant 3 se fait par un mouvement de la tige de réglage I5 , qui est rotatif par rapport à l'arbre de prise I . Cette tige I5 est munie d'un vis sans fin, qui est engrèné à des couronnes dentées de la base des boulons 6 et 7 . La tige de réglage I5 se trouve  dans une perforation axiale et longitudinale au centre de l'arbre de prise. Les boulons 6 et 7 tournent simultanément dans un sens ou autre selon la rotation de la tige de réglage 15 . Ces boulons tournent librement dans des cavités hémicylindriques dans l'arbre de prise, sans pouvoir bouger dans le sens radial. Ils s'engrènent par leur filet dans le filet correspondant hémicylindrique dans le cylindre coulissant 3 .Ils le mouvent ainsi vers une position d'excentricité plus ou moins grande, voir nulle.

La tige de réglage I5 est mise en rotation par deux disques de freinage 13 et 14 , qui se trouvent à l'extrémité de l'arbre de prise I et de la tige de réglage I5. Un disque I3 est fixé sur la tige de réglage I5. Quand il est freiné, l'arbre de prise tournant,  la tige fait un mouvement rotatif de contresens  par rapport à l'arbre de prise I.  L'autre disque de freinage I4 est engrèné à des roues dentées satellites , dont les axes sont montés sur l'arbre de prise . Ces roues s'engrènent à leur tour dans des dents de la tige de réglage I5 . Quand ce disque I4 n'est pas freiné, il tourne à la même vitesse que celle de l'arbre de prise I et de la tige de réglage I5. Quand il est freiné, il fait tourner la tige  de réglage I5 . La vitesse de cette tige va jusqu' au double de celle de l'arbre de prise I , allant dans le même sens que celui ci . La position des roues dentées satellites est la cause de ce mouvement.
Le fonctionnement est donc le suivant:
Le cylindre coulissant 3 se trouve dans une position concentrique avec l'arbre de prise 1 quand celui ci se met à tourner. Dans cette position il n'y a aucun couple entre l'arbre de prise I et le cylindre sortie 2 . Pour embrayer, le disque de freinage 13 est freiné et fait tourner la tige de réglage en contresens. Le vis sans fin de la tige de réglage fait tourner les boulons 6 et 7 , qui pressent le cylindre coulissant 3 vers une position excentrique. Cette excentricité se transmet au cylindre à charnières 4 , qui fait une rotation à polarité fixe étant guidé par des croix de guidage I2 . Les bases de poussoir 5, actionnés par le cylindre à charnières 4 font un mouvement circulaire 25, ce qui cause un mouvement de va-et-vient des sommets de poussoir 5 dans la cannelure du cylindre de sortie 2 .Deux corps de coinçage opposés, reliés au sommet de poussoir , fonctionnent en roue libre et transmettent une partie du mouvement des sommets de poussoir au cylindre de sortie 2 . Le sommet de poussoir qui a la plus grande vitesse mène les autres. Comme ces sommets se suivent en donnant des impulsions au cylindre de sortie, ils le font tourner d'une façon assez régulière.

Revendications

1. Transformateur de couple fonctionnant en transformant la rotation de l'arbre de prise(I) en un mouvement d' excentricité variable. Ce mouvement excentrique est transformé dans des mouvements de va-et-vient qui sont à leur tour transformés dans des mouvements unidirectionnels, qui actionnent la rotation du corps de sortie(2). Cette rotation varie en vitesse suivant la dimension de l'excentricité, étant zéro à excentricité nulle.

La tige de réglage(I5) commande la variation de couple. Elle se trouve au centre de l'arbre de prise. Elle tourne dans le contresens de l'arbre de prise (1) quand elle est retardée par le freinage du disque de freinage (13) . Elle tourne dans le sens de cette rotation quand le disque d'accélération (14) est freiné. Ces mouvements rotatifs de la tige de réglage (15) se transmettent par un vis sans fin à deux boulons (6 et 7) parallèles. Ceux-ci mouvent un cylindre coulissant (3) radialement sur l'arbre de prise (I). Ce mouvement va d'une position d'excentricité nulle, à une position d'excentricité maximum. Un cylindre à charnières (4) , qui se trouve autour du cylindre coulissant (3),est guidé par des croix de guidage (I2) . Il fait un mouvemnt rotatif à polarité fixe (25), ayant un rayon allant de zéro à un maximum, suivant la position plus ou moins excentrique du cylindre coulissant (3). Il communique ce mouvement rotatif aux bases d'un nombre de poussoirs (5) , qui sont disposés radialement. Ceci cause un mouvement de va-et-vient des sommets des poussoirs (5) , qui se trouvent dans une cannelure du cylindre de sortie (2). Ces sommets sont reliés chacun par un système de boucles a deux corps de coinçage opposés (I9 et 20), qui fonctionnent en roue libre par rapport au cylindre de sortie (2).

Ils communiquent successivement des impulsions au cylindre de sortie (2) qui le font tourner. La vitesse de celui-ci est zéro à excentricité nulle, et va à un maximum à excentricité maximale.

2. Transformateur de couple selon I, caractérisé en ce que la rotation de la tige de réglage (I5), est causé par un servomoteur électrique, dont le rotor est fixé sur la tige de réglage et le stator , ou sur la masse, ou sur l'arbre de prise.(↑).

3 Transformateur de couple selon I et 2 , caractérisé en ce que le mécanisme d'excentricité, se trouvant à l'intérieur du cylindre coulissant, est différent de celui décrit dans 1.

4. Transformateur de couple selon I,2 et 3 caractérisé en ce que le système de guidage du cylindre à charnières (4), pour le maintenir à polarité fixe,est différent de celui décrit dans 1.

5. Transformateur de couple selon I,2,3 et 4 , caractérisé en ce que le système de couplage unidirectionel, transmettant la poussée des sommets de poussoirs (5) au cylindre de sortie (2) est différent de celui décrit dans I.

6. Transformateur de couple selon I,2,3,4 et 5 caractérisé en ce qu'il y a un deuxième transformateur de couple de ce genre, monté à côté du prmier, actionné par le même arbre de prise , la direction d'excentricité du second se trouvant à I80 ° par rapport au premier, éliminant ainsi des vibrations causés par l'excentricité des rotations.

7. Transformateur de couple, caractérisé en ce que le cylindre dit de sortie(2) est fixé à la masse et la transmission le sortie se fait par un cylindre qui tourne concentriquement avec l'arbre de prise juste au côté extérieur d'une croix de guidage (12/2). Ce cylindre est mis à tourner, parcequ'il est muni des entailles qui se trouvet dans la masse selon I.L'autre croix de guidage est omis dans ce cas.

FIG.1

FIG. 2

0032888

3

FIG.4

FIG.3

FIG.5

FIG.6

12

0032888

4

FIG.8

FIG.7

2

5

FIG.9

5

5

FIG.10

16

FIG.11

4

15

1

FIG.12

6-7

0032888

5

FIG.13

FIG. 14

FIG.15

FIG.16